Europäisches Patentamt

European Patent Office

Office européen des brevets

(11) Publication number: **0 088 468**
**B1**

(12) **EUROPEAN PATENT SPECIFICATION**

(45) Date of publication of patent specification: **19.07.89**

(21) Application number: **83200286.9**

(22) Date of filing: **25.02.83**

(51) Int. Cl.⁴: **F 25 B 29/00,** C 02 F 1/22,
F 25 C 1/16

(54) Heat pump.

(30) Priority: **05.03.82 NL 8200922**

(43) Date of publication of application:
**14.09.83 Bulletin 83/37**

(45) Publication of the grant of the patent:
**19.07.89 Bulletin 89/29**

(84) Designated Contracting States:
**AT BE CH DE FR GB IT LI LU NL SE**

(56) References cited:
**EP-A-0 015 157**
**EP-A-0 042 795**
**WO-A-82/03679**
**DE-A-2 649 872**
**US-A-3 443 393**
**US-A-3 535 210**
**US-A-4 003 213**
**US-A-4 044 568**

**MECHANICAL ENGINEERING, vol. 99, no. 4,
April 1977, "The ice house cometh", page 71**

(73) Proprietor: **NEDERLANDSE CENTRALE
ORGANISATIE VOOR TOEGEPAST-
NATUURWETENSCHAPPELIJK ONDERZOEK
Juliana van Stolberglaan 148
NL-2595 CL The Hague (NL)**

(72) Inventor: **Collet, Peter Jacobus
Henri Dunantlaan 55
NL-7312 AV Apeldoorn (NL)**

(74) Representative: **van der Beek, George Frans, Ir.
et al
Nederlandsch Octrooibureau Scheveningseweg
82 P.O. Box 29720
NL-2502 LS 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 088 468 B1

## Description

The invention is concerned with a method for the operation of a heat pump of the compression or absorption type, arranged for extracting heat from low temperature water as a main heat source, like groundwater, surface water, brackish water or sea water at a temperature between approximately 0°C and 10°C, including a closed circuit containing a heat transfer fluid, a condensor means for delivering heat to an outside medium at a higher temperature level, a throttling means, an evaporator designed for receiving heat from the low temperature heat source and transferring it into the liquid heat transfer fluid at a temperature below 0°C, means for circulating said heat transfer fluid from said evaporator to said condensor means for transporting heat therebetween, a vacuum vessel designed to withstand a subpressure below 0.006 ata at the triple-point of water at 0°C, means for supplying water as the main heat source into said vacuum vessel, a vacuum pump connected to said vacuum vessel for maintaining said subpressure by evacuating dissolved gases introduced by the supplied water, in which the evaporator is situated free of any contact with solid water or suspension in a vessel which is in flow connection with the vacuum vessel to receive the flow of heat transporting water-vapor evaporating from the water under ice formation at said triple-point conditions in the vacuum vessel, discharging means for the extraction of the water/ice crystal suspension from the vacuum vessel, further including means in said vacuum vessel for promoting the evaporation of water vapor from said water in the vacuum vessel and for keeping the resultant water/ice crystal suspension in continuous movement, comprising the steps of

—introducing a charge of water from the main heat source into the vacuum vessel, while

—creating and substantially maintaining a pressure below the triple-point of water at approximately 0.006 ata,

—maintaining the heat pump continuously operational at any load up to full load, its heat transfer fluid entering in liquid phase at a temperature below 0°C into the evaporator when being in operation,

—evaporating the water charge resulting in the forming of ice crystals in it, the vapor rising and desublimating on the evaporator outside forming an increasing ice layer,

—continuing this vacuum-freeze-vaporization and desublimation process until the ice layer on the evaporator has grown to a predetermined maximum thickness, while limiting the maximum ice concentration in the water charge to approximately 30% ice in the water in order to keep the suspension pumpable, and

—defrosting the evaporator at the end of the above-mentioned cycle.

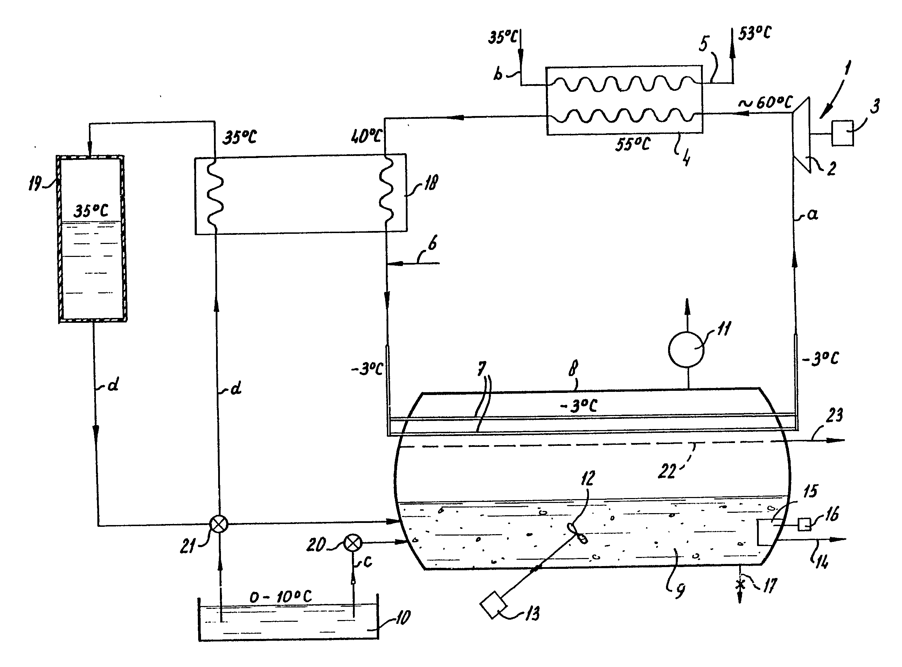

A method as described above to operate a heatpump is known from U.S. Patent Specification 4,003,213 to Cox. From this publication a vacuum-freeze process is known for heat pump application in optional combination with cooling and/or desalination processes. Water vapor is formed in the vacuum chamber under triple-point conditions. According to figures 2 and 3 of the publication to Cox, said water vapor is transported to the outside of an evaporator forming part of a heat pump circuit. The heat transfer fluid enters the evaporator pipes at a sub-zero temperature. Normally there would build up an ice-layer which periodically will have to be removed. However, Cox avoids this by either compressing the low pressure/high volume water vapor to such pressure and temperature that the outer surface of the evaporator pipes is kept at a temperature just above 0°C, or the ice forming is avoided by rinsing an anti-freeze solution over the outside of the evaporator pipes. An important disadvantage of the first-mentioned process is formed by the necessity to operate and install a very large low-pressure compressor for the transportation of the water-vapor, which compressors are critical and expensive. The disadvantage of the other method is the necessity of adopting a special absorbing fluid and a means for regeneration of the diluted absorbing fluid.

The invention aims to overcome these disadvantages and to provide a simpler method to defrost the evaporator periodically, while maintaining meanwhile the heat pump operational.

The above-mentioned method is therefore characterized in that said defrosting step is formed by an additional defrosting cycle while the heat pump remains normally operational, by

—discharging the water/ice suspension as remainder of the water charge from the vacuum vessel,

—introducing a volume of water heated by heat exchange with the heat transfer fluid upstream of the throttling means to an elevated temperature of approximately 35°C into the vacuum vessel while the vacuum pump continues operation, flash evaporating this water at the prevailing low pressure, producing such intensive vapor production that this vapor does not longer desublimate but condenses on the ice layer on the evaporator, not only providing the heat for the evaporation of the heat transfer fluid of the heat pump circuit, but also melting in short time all ice off from the evaporator, wherein the temperature of the water charge in the vessel has appreciably dropped at which moment with the introduction of

—a fresh water charge from the main source, the normal water level is restored in the vacuum vessel to start a next vacuum-freeze-vaporization and desublimation process.

The advantage of making use of the solidification heat of the water is retained, since amongst others in doing so the water consumption can be small for a given heat pump capacity. For making use of the sensible heat of water there may be withdrawn 4.18 kJ per kg water and per °C drop of temperature. Making use of the solidification of water to ice, however, 334 kilojoules become available with the formation of one kg of ice.

According to the invention the formation of ice on the evaporator takes substantially place in the form of a desublimation process. Since the water forming the heat source is supplied at a temperature between approximately 0° and 10°C, the strong evaporation necessary for this kind of heat transport can only take place if a deep subpressure is maintained in the vessel, which is lower than the triple-point of water. Under said conditions the water in the vessel can "boil" and have a large vapor production and simultaneously form ice crystals in the water, during which solidification the heat necessary for the evaporation is produced. For illustration purposes the following numerical example is given, in which for reasons of simplicity the numerical values are slightly rounded off. Furthermore, it is assumed that the water in the vessel has a temperature of 0°C and that no sensible heat is released by the water anymore.

According to older well-known systems with formation of plate ice or block ice on the evaporator, 334 kJ become available from the solidification heat of one kg of ice. Said 1 kg of ice is exclusively situated on and around the evaporator.

According to the invention, however, for the supply of 334 kJ to the evaporator which is situated above the water, only 0.118 kg of ice is deposited on the evaporator. Simultaneously in the bath a quantity of 0.882 kg of ice crystals is formed, giving in total again 1 kg of ice to supply said 334 kJ to the evaporator. Under the given conditions of vacuum the bath "boils", evaporating 0.118 kg of water for which per kg 2500 kJ are required, so that for said evaporation 295 kJ will have to be withdrawn from the water content. Since the solidification heat produces 334 kj per kg, in the bath 295:334=0.882 kg of ice is formed. The water vapor flows by itself to the place where it condenses, being the condensor, on which 2500 kJ/kg of vapour is freed. The transported 0.118 kg of vapour transmits the earlier mentioned 295 kJ to the evaporator during its condensation. Subsequently said 0.118 kg of condensed water freezes under the formation of ice and thereby produces again

$$0.118 \times 334 \text{ kJ} = 39 \text{ kJ,}$$

so that in total

$$295 + 39 = 334 \text{ kJ}$$

is transmitted to the evaporator. Thus the heat balance is fully closed again. The process on the evaporator, simplified above, in practice substantially will take place in the form of a desublimation process.

The essential difference with the known evaporator with formation of block ice or plate ice, is the same quantity of heat is transmitted from the water to the evaporator, but with a formation of only 0.118 kg of ice on the evaporator instead of the 1. kg in case of the known state of art. The remaining ice formation has taken place in the bath of water and amounts to 0.882 kg, so that in total again 0.882+0.118=1 kg of ice is formed. It will be appreciated that, in case the evaporation would only take place on the surface of the water with a temperature of 0°C, there would be formed a thin layer of ice, which soon would bring the required process of heat transfer by evaporation to an end. It is therefore necessary that the water is mixed intensively and continuously or that, as is known in itself, the evaporation surface is further increased by having the water flow over plates or to have it sprayed through fountains, but it should be avoided that the water ever makes direct contact with the evaporator. The heat transport exclusively takes place through the vapour phase. It is known that when the water is mixed so intensely, the ice crystals remain of small dimensions and do not coagulate and that a well-pumpable water/ice crystal suspension is formed. For instance a suspension up to approximately 30% of volume of ice crystals has been found to be still pumpable without coagulation having to be feared. During the heat pump operation the extraction of the ice/water suspension may continuously take place as well as a corresponding supply of fresh water.

One of the important advantages attained by the invention is the fact that during regeneration only 11.8% of all ice will have to be removed from the pipes or the evaporator. At the same time a pumpable water/ice crystal suspension is formed, which is replaced by fresh water between 0°C and 10°C in order to form the heat source during the next cycle at continued operation of the heat pump. It is remarked that in the above only that part of the process is discussed, during which the water in the vessel is at a temperature of 0°C, under the required condition of vacuum. In case water is supplied which is warmer than 0°C, like for instance groundwater at approximately 10°C, of course first the temperature of the water will fall by exclusively boiling, without formation of ice, from the supply temperature down to 0°C, but the heat quantity transmitted during this part of the process is only small since the sensible heat of the water is only 4.18 kJ per kg and per °C, compared to 334 kJ per kg in case of solidification and 2500 kJ per kg in case of evaporation or condensation.

According to the invention for defrosting it is only necessary to withdraw the ice/water suspension from the vessel and to fill the vessel with some water at a temperature between approximately 25°C and 35°C. In doing so the vapor pressure in the vessel rises by flash evaporation to between approximately 0.03 and 0.05 ata and the ice formed on the evaporator is completely melted away from its outside due to the temporary very intensive heat exchange resulting from the comparatively very intensive condensation of the water vapor on it. A reverse mode-operation of the heat pump is not necessary during the defrosting of the evaporator outside. The heat pump can even continue its normal service.

With many heat pump installations the heat pumped up by the heat pump circuit is delivered into a heating circuit which enters the condensor at about 35°C and leaves said condensor at approximately 53°C. The medium in the heat pump circuit is cooled in the condensor from approximately 60°C down to approximately 40°C, condensing thereby at a temperature of about 55°C, being the condensation temperature of a very common heat transport fluid like freon which may be used in the heat pump circuit. The liquid cooling fluid flow leaving the condensor at about 40°C still contains so much surplus heat at a useful temperature level, that with said heat for instance some water of the main heat source at a temperature of between 0°C and 10°C may be preheated in order to be charged into the vacuum vessel at the next defrosting cycle. The isolated water accumulator incorporated in said auxiliary circuit can thus be filled with water at approximately 35°C.

The ice formed in the lower part of the vessel is more or less pure, although impure water may have been used as heat source. Contaminated groundwater, salt water and brackish water are all applicable, as long as the installation is sufficiently corrosion resistant. By separating the ice from the water/ice suspension withdrawn from the vessel and by eventually washing it, purified and fresh water can be won. In a simple way it is possible as well to use the ice, stored in a season accumulator, for cooling purposes during for instance the hot season. Distilled water can be produced as well in case the ice melted off from the evaporator, would separately be caught and withdrawn.

Furthermore it may be remarked that with the greater part of the known heat pump cycles the heat transport medium passes through the heat pump cycle such, that the cooling fluid enters the evaporator in liquid phase at a temperature of approximately −3°C and subsequently is evaporated in it, so that the evaporator has an overall internal wall temperature of about −3°C. This is for instance the case when freon is used in the circuit. It is furthermore remarked that the above described installation will be more attractive the larger it capacity is. In consideration are for instance heat pump installations for the heat supply to residence blocks with one or several hundreds of apartments or whole districts, or buildings with a comparable heat demand. Application in the greenhouse culture seems attractive as well.

Since the heat transfer in the vacuum vessel takes place with a heat flow density which, for a given rate of ice formation is eight times the density used in the known evaporators with the formation of plate- or block ice, the vacuum vessel may be kept within reasonable sizes, which is especially attractive for a vessel working under vacuum conditions. The required vacuum pump can be small and requires little power, because it only serves to withdraw the gases dissolved in each new water charge. The required vacuum is of an order for which vacuum pumps of simple type normally available in the trade are applicable.

Finally it may be pointed out that, in contradiction to for instance a heat pump with heat extraction from the ambient air, having the disadvantage of producing noise and cold air, the ice formed according to the invention thus forms in many cases a useful and valuable additional product.

Apart from U.S. Patent Specification 4,003,213 to Cox it is also known from U.S. Patent Specification 3,443,393 to Goldberg to use a vacuum-freeze process for desalination purposes only. Water vapor is removed from the vacuum chamber in essentially the same manner as described above in connection with the Cox U.S. Patent Specification 4,003,213, such that after removal from the vacuum chamber it is compressed followed by condensation. This of course, is in contrast with the invention.

Lastly the Cheng European Patent Application 0,015,157 describes a vacuum-freeze process for separating water from aqueous solutions, in particular for desalination purposes. Water vapor is desublimated on one side of a dividing wall, within the vacuum vessel, as a result of heat exchange with an ice/water slurry melting at a very high pressure on the other side of the wall. The high pressure level causes a reduction in melting temperature which is necessary for a heat flow to take place from the heat-producing desublimate side (which is already at a slightly subzero temperature level) to the heat absorbing melting side. In order to periodically remove the desublimate, the temperature gradient and consequently the direction of heat flow is reversed. The temperature of the melting desublimate side (now heat absorbing) is brought down by bringing this ice in direct contact with an aqueous solution, and on the other (now heat producing) side water is frozen at atmospheric pressure, thus bringing up the temperature to 0°C. These processes are obviously of a discontinuous nature. Because desublimation is effected by melting off ice, no externally to be removed ice is formed; the process is therefore by principle only a desalination process.

The advantages of the process according to the invention over all known methods therefore are: simpler process, thus simpler apparatus and control, smaller investment, more efficient, continuous and more reliable, less maintenance.

To summarize the basic differences between the Cheng-application and the invention: with Cheng the direction of the heatflow is reversed during defrosting of the outside of the heat exchanger. This is the process inside the heat exchanger discontinuous. The necessary use of an aqueous solution at the outside of the heat exchanger is a complication and may lead to corrosion and scale-production.

According to the invention, however, inside the heat exchanger, thus in the heat pump circuit at the evaporator, no (significant) alterations need take place: the heatflow can remain continuous in the same direction with approximately the same intensity (until all desublimate ice is melted off).

Further never any fluid is in contact with the outside of the heat exchanger (evaporator) except condensed and/or frozen (desublimate) water vapor, avoiding any danger for corrosion or scale production. Although the desublimation is periodically altered into condensation (during defrosting), the vacuum freezing is only temporarily interrupted during defrosting and is afterwards automatically resumed, whilst the heatpump process continues practically unaffected.

From the accompanying drawing and its detailed description the invention will be explained in detail.

In the drawing the heat pump circuit and the heat pump are schematically depicted. Although the invention is also concerned with a heat pump of the absorption type, in the Figure and following description a heat pump of the compression type will be explained in detail by way of example. In the compressor 2 the circulated heat transport medium, like for instance freon, is compressed. The compressor is driven by a schematically indicated motor 3. The freon circuit is schematically indicated with a. The freon vapour compressed by the compressor 2 leaves the compressor at increased pressure and at a temperature of say about 60°C or higher. At the prevailing pressure the condensation temperature of the freon is about 55°C. In the freon circuit follows subsequently the condensor 4, in which the freon vapour is cooled to its condensation temperature of about 55°C and further releases heat during its condensation. All released heat is transferred into the heating circuit b, which for instance is the heating circuit of a district, a factory or so. The medium in the heating circuit b, for instance, water, enters the condensor 4 with a temperature of approximately 35°C and leaves the condensor at 5 with a temperature of approximately 53°C. The heat supply to the circuit b forms the main function of the heat pump. The freon condensed in the condensor 4 leaves the condensor with a temperature of approximately 40°C at a pressure which is only a little lower than the outlet pressure from the compressor 2. The heat exchanger 18, incorporated in the circuit, will be discussed later. In the freon circuit a follows the throttle- or expansion valve 6, by which the pressure is reduced and at the same time the temperature falls to approximately −3°C, which is a temperature which under all circumstances is below the freezing point of water. Then the liquid freon is led through a group of evaporator tubes 7, which are only depicted schematically. Said evaporator tubes can have all possible practical known shapes, may also be plate-shaped and need not to extend horizontal. By heat input from the outside into the evaporator the liquid freon evaporates to form freon vapour and maintains its temperature of −3°C. In general the installation is designed such that the liquid is just completely evaporated when leaving the evaporator, so that the outlet temperature of the freon vapour is also approximately −3°C. This vapour is subsequently fed again to the suction side of the compressor 2, thus closing the circuit followed by the heat pump transport fluid. According to the invention the evaporator 7 is placed in the upper part of a vacuum vessel 8. In this vessel a vacuum pump 11 maintains a pressure below 0.006 ata, which is such that water 9 contained in the lower part of the vessel, finds itself at its triple point, provided the water has a temperature of 0°C. Because the evaporator has a temperature below 0°C, water vapour will desublimize on the evaporator tubes, transferring thereby both condensation heat and solidification heat to the freon liquid within the evaporator tubes. By continuously keeping the water contained in the vessel in circulation by means of a schematically depicted stirring means 12 driven by a motor 13, and by preferably further promoting the evaporation by means of non-illustrated fountains or so, on the one hand an intensive "boiling" of the water at the constant temperature of 0°C will take place, whereby the developed water vapour condenses and freezes on the evaporator, whereas on the other hand the heat required for the "boiling" is withdrawn from the water of 0°C, resulting in ice crystals being formed in it. Thanks to the continuing intermixing an increasing number of small individual ice crystals are formed, which do not conglomerate, so that after some time a water/ice suspension is formed, which remains well pumpable up to an ice percentage of say 30% by volume. Thanks to the applied heat transport from the water bath to the evaporator 7 by means of the vapour phase, approximately 88% of the formed ice will stay in the bath and only about 12% will be formed on the evaporator 7, in spits of the fact that all liberated heat during the formation of all ice is transferred to the freon during its evaporation in the evaporator 7. Through a discharge pipe 14 the water/ice suspension easily can be withdrawn and with the help of not illustrated means, treated further, if so required. Thereby the ice may be utilized if wanted, for instance, in a season-accumulator to provide for the cooling requirements in the warm season. Furthermore the ice formed, eventually after being washed, may provide a fresh water source, especially in case the water fed to the vacuum vessel 8 has not been fresh water, but for instance salt water, brackish water or groundwater.

As heat source for the heat pump water is used of a temperature between 0°C and approximately 10°C, which may be surface water, groundwater, seawater, brackish water, etc. Schematically this water source is indicated with 10. Through a circuit c and a valve 20 periodically, or also continuously, water can be introduced from the water source 10 into the vessel 8. In case of continuous supply also the outlet of the water/ice suspension through the pipe 14 will have to take place continuously.

Since the evaporator 7 will have to be defrosted periodically, which takes place by melting the ice off, it may be useful to install under the evaporator a schematically indicated trough 22 to catch the melting ice since here pure distilled water is concerned. This can separately be extracted through pipe 23 for further use.

The method to perform the periodic defrosting of the evaporator 7 makes use of the remaining low temperature heat in the freon circuit a after it has left the condensor 4 with a temperature of about 40°C. In a heat exchanger 18, incorporated in the circuit a upstream of the throttle valve 6, it is possible to heat with said heat, water in an additional arrangement d up to about 35°C. This heated water may come from the same source 10 and is stored after its warming up in an insulated accumulator 19. From this accumulator it can be introduced periodically through valve 21 into the vacuum vessel 8. Preferably this is done when the supply valve 20 in the circuit c is closed and after the water/ice suspension has been completely discharged through the discharge pipe 14. The water entering the vacuum vessel 8 with a temperature of 35°C will come to a very intensive flashlike vapor production, which is so strong that even with the freon circuit a remaining in normal operation, practically all ice is melted off from the evaporator 7 within a short period. At the most a very thin ice layer of some tenth of a mm may remain on the exterior of the evaporator 7, which is no handicap, since the evaporator is designed to work with an on average much thicker ice layer. With this method of defrosting the heat supply takes place by means of the vapor attacking the ice on its outer surface so that the ice will be removed completely in the form of water. After this short defrosting cycle the bath 9 can be further fill up to its normal level with water from the source 10. During the defrosting cycle the introduced water of 35°C is appreciably cooled down and the vacuum pump 11 has meanwhile restored the pressure in the vessel necessary to attain the triple-point at 0°C. During the following desublimation cycle the accumulator 19 is gradually filled again with water of 35°C.

## Claim

Method for the operation of a heat pump of the compression or absorption type, arranged for extracting heat from low temperature water as a main heat source (10), like groundwater, surface water, brackish water or sea water at a temperature between approximately 0°C and 10°C, including a closed circuit (a) containing a heat transfer fluid, a condensor means (4) for delivering heat to an outside medium (b) at a higher temperature level, a throttling means (6), an evaporator (7) designed for receiving heat from the low temperature heat source and transferring it into the liquid heat transfer fluid at a temperature below 0°C, means (2, 3) for circulating said heat transfer fluid from said evaporator (7) to said condensor means (4) for transporting heat therebetween, a vacuum vessel (8) designed to withstand a subpressure below 0.006 ata at the triplepoint of water at 0°C, means (20) for supplying water as the main heat source (10) into said vacuum vessel, a vacuum pump (11) connected to said vacuum vessel (8) for maintaining said subpressure by evacuating dissolved gases introduced by the supplied water, in which the evaporator (7) is situated free of any contact with solid water or suspension in a vessel which is in flow connection with the vacuum vessel (8) to receive the flow of heat transporting water-vapor evaporating from the water under ice formation at said triple-point conditions in the vacuum vessel, discharging means (14) for the extraction of the water/ice crystal suspension from the vacuum vessel, further including means (12, 13) in said vacuum vessel for promoting the evaporation of water vapor from said water in the vacuum vessel and for keeping the resultant water/ice crystal suspension in continuous movement, comprising the steps of

—introducing a charge of water (9) from the main heat source (10) into the vacuum vessel (8), while

—creating and substantially maintaining a pressure below the triple-point of water at approximately 0.006 ata,

—maintaining the heat pump continuously operational at any load up to full load, its heat transfer fluid entering in liquid phase at a temperature below 0°C into the evaporator (7) when being in operation,

—evaporating the water charge (9) resulting in the forming of ice crystals in its, the vapor rising and desublimating on the evaporator (7) outside forming an increasing ice layer,

—continuing this vacuum-freeze-vaporization and desublimation process until the ice layer on the evaporator has grown to a predetermined maximum thickness, while limiting the maximum ice concentration in the water charge (9) to approximately 30% ice in the water in order to keep the suspension pumpable, and

—defrosting the evaporator (7) at the end of the above-mentioned cycle,

characterized in that said defrosting step is formed by an additional defrosting cycle while the heat pump remains normally operational, by

—discharging the water/ice suspension as remainder of the water charge (9) from the vacuum vessel (8),

—introducing a volume of water (19) heated by heat exchange with the heat transfer fluid upstream of the throttling means (6) to an elevated temperature of approximately 35°C into the vacuum vessel (8) while the vacuum pump (11) continues operation, flash evaporating this water at the prevailing low pressure, producing such intensive vapor production that this vapor does not longer desublimate but condenses on the ice layer on the evaporator (7), not only providing the heat for the evaporation of the heat transfer fluid of the heat pump circuit, but also melting in short time all ice off from the evaporator (7), wherein the temperature of the volume of water (19) in the vacuum vessel (8) has appreciably dropped at which moment with the introduction of

—fresh water charge (9) from the main source (10), the normal water level is restored im the vacuum vessel (8) to start a next vacuum-freeze-vaporization and desublimation process.

**Patentanspruch**

Verfahren zum Betrieb einer Wärmepumpe des Kompressions- oder Absorptionstyps,

die dazu bestimmt ist, Wärme aus Wasser von niedriger Temperatur als Hauptquelle (10) von Wärme, wie Grundwasser, Oberflächenwasser, Brrackwasser oder Meerwasser, bei einer Temperatur zwischen etwa 0°C und 10°C zu entziehen und umfasst:

einen geschlossenen Kreislauf (a), der ein Wärmeübertragungsfluid, ein Kondensatormittel (4) zum Liefern der Wärme zu einem Aussenmedium (b) bei einem höheren Temperaturwert, ein Drosselklappenmittel (6) einen zum Erhalt von Wärme aus der Wärmequelle von niedriger Temperatur und zu ihrer Uebertragung in das flüssige Wärmeübertragungsfluid bei einer Temperatur unter 0°C ausgebildeten Verdampfer (7), Mittel (2, 3) zum Bringen dieses Wärmeübertragungsfluids in Umlauf von diesem Verdampfer (7) zu diesem Kondensatormittel (4) zwecks Transportierens von Wärme dazwischen, ein zum Aushalten eines Unterdrucks unterhalb von 0,006 ata beim Tripelpunkt von Wasser bei 0°C ausgebildetes Vakuumgefäss (8), Mittel (20) zum Zuleiten von Wasser als Hauptquelle (10) von Wärme zu diesem Vakuumgefäss (8), eine mit diesem Vakuumgefäss (8) verbundene Vakuumpumpe (11) zum Aufrechterhalten dieses Unterdrucks durch Abziehen von mit dem zugeleiteten Wasser eingeführten gelösten Gasen umfasst,

wobei der Verdampfer (7) ohne jeglichen Kontakt mit festem Wasser oder Suspension in einem Gefäss angeordnet ist, welches in Flussverbindung mit dem Vakuumgefäss (8) steht, um den Fluss von Wärme transportierendem Wasserdampf, der aus dem Wasser unter Eisbildung bei diesen Tripelpunktbedingungen im Vakuumgefäss verdampft, zu erhalten,

Auslassmittel (14) zum Entziehen der Wasser/Eiskristall-Suspension aus dem Vakuumgefäss,

ferner umfassend in diesem Vakuumgefäss vorgesehene Mittel (12, 13) zur Förderung der Verdampfung von Wasserdampf aus diesem Wasser im Vakuumgefäss und zum Halten der resultierenden Wasser/Eiskristall-Suspension in ständiger Bewegung, umfassend die Verfahrensschritte von

—Einführung einer Wassercharge (9) aus der Wärmehauptquelle (10) in das Vakuumgefäss (8) unter

—Erzeugung und im wesentlichen Aufrechterhaltung eines Druckes unterhalb vom Triplepunkt von Wasser bei etwa 0,006 ata,

—Aufrechterhaltung des ständigen Betriebs der Wärmepumpe bei jeder Last bis zur Vollast, wobei ihr Wärmeübertragungsfluid in den Verdampfer (7) während seines Betriebs in flüssiger Phase bei einer Temperatur unter 0°C eintritt,

—Verdampfung der Wassercharge (9), was darin zu Bildung von Eiskristallen führt, wobei der Dampf steigt und sich an der Aussenseite des Verdampfers (7) unter Bildung einer waschsenden Eisschicht desublimiert,

—Weiterführung dieses Prozesses von Verdampfung mit Vereisung unter Vakuum und von Desublimation, bis die Eisschicht am Verdampfer auf eine vorbestimmte Maximaldicke gewachsen ist, während die maximale Eiskonzentration in der Wassercharge (9) auf etwa 30% Eis im Wasser begrenzt wird, um die Suspension pumpfähig zu halten,

—Enteisung des Verdampfers (7) am Ende des vorgenannten Zyklus, dadurch gekennzeichnet, dass dieser Verfahrensschritt der Enteisung von einem zusätzlichen Enteisungszyklus gebildet wird, während die Wärmepumpe normal in Betrieb bleibt, indem

—die Wasser/Eis-Suspension als übrigbleibender Teil der Wassercharge (9) aus dem Vakuumgefäss (8) ausgelassen wird,

—ein Wasservolumen (19), das durch Wärmeaustausch mit derm Wärmeübertragungsfluid stromaufwärts vom Drosselmittel (6) auf eine hohe Temperatur von etwa 35°C geheizt worden ist, in das Vakuumgefäss (8) eingeführt wird, während die Vakuumpumpe (11) in Betrieb bleibt, dieses Wasser beim herrschenden niedrigen Druck blitzverdampft wird, das solch eine intensive Dampfproduktion verursacht, dass dieser Dampf sich nicht mehr desublimiert, sondern auf der Eisschicht am Verdampfer (7) kondensiert, was nicht nur die Wärme zur Verdampfung des Wärmeübertragungsfluids des Wärmepumpekreislaufs liefert, sondern auch in kurzer Zeit alles Eis vom Verdampfer (7) wegschmilzt, wobei die Temperatur des Wasservolumens (19) im Vakuumgefäss (8) in nennenswerter Weise sinkt und zu diesem Zeitpunkt durch Einführung einer

—Frischwassercharge (9) aus der Hauptquelle (10) der normale Wasserstand im Vakuumgefäss (8) wieder hergestellt wird, um einen neuen Prozess von Verdampfung mit Vereisung unter Vakuum und von Desublimation zu starten.

**Revendication**

Procédé de fonctionnement d'une pompe à chaleur du type à compression ou â absorption,

destinée à extraire de la chaleur d'une eau à basse température en tant que source de chaleur principale (10), telle qu'eau souterraine, eau superficielle, eau saumâtre ou eau de mer, à une température entre environ 0°C et 10°C, et qui comporte

un circuit fermé (a) qui comprend un fluide de transfert de chaleur, un moyen condenseur (4) pour fournir de la chaleur à un milieu extérieur (b) à une température plus élevée, un moyen de vanne d'étranglement (6), un évaporateur (7) conçu pour recevoir de la chaleur de la source de chaleur à basse température et pour la transférer à une température inférieure à 0°C au fluide de transfert de chaleur à l'état liquide, des moyens (2, 3) pour faire circuler ce fluide de transfert de chaleur de cet évaporateur (7) vers ce moyen condenseur (4) pour transporter de la chaleur entre eux, une enceinte à vide (8) conçue pour résister à une dépression au-dessous de 0,006 ata au point triple de l'eau à 0°C, un moyen (20) pour amener de l'eau à cette enceinte à vide en tant que source de chaleur principale (10), une pompe à vide (11) reliée à cette enceinte à vide (8) pour maintenir cette dépression en évacuant les gaz dissous introduits par l'eau d'alimentation,

l'évaporateur (7) étant placé, dénué de tout contact avec de l'eau solide ou une suspension, dans une enceinte qui est en relation de flux avec l'enceinte à vide (8) afin de recevoir le flux de vapeur d'eau transportant de la chaleur et s'évaporant de l'eau avec formation de glace dans ces conditions de point triple dans l'enceinte à vide,

des moyens de décharge (14) pour extraire de l'enceinte à vide la suspension eau/cristaux de glace,

comprenant en outre des moyens (12, 13) situés dans cette enceinte à vide pour favoriser l'évaporation de la vapeur d'eau en provenance de cette eau dans l'enceinte à vide et pour maintenir continuellement en mouvement la suspension eau/cristaux de glace résultante, comportant les étapes de procédé dans lesquelles

—on introduit une charge d'eau (9) de la source de chaleur principale (10) dans l'enceinte à vide (8) pendant que

—l'on crée et maintient essentiellement une pression inférieure au point triple de l'eau à environ 0,006 ata,

—on maintient continuellement en service la pompe à chaleur à toute charge jusqu'à la pleine charge, son fluide de transfert de chaleur entrant en phase liquide dans l'évaporateur (7) à une température inférieure à 0°C lors de son fonctionnement,

—on évapore la charge d'eau (9) ce qui y provoque la formation de cristaux de glace tandis que la vapeur s'élève et se désublime sur l'extérieur de l'évaporateur (7) en formant une couche de glace croissante,

—on continue ce processus de vaporisation avec congélation sous vide et de désublimation jusqu'à ce que la couche de glace sur l'évaporateur se soit accrue jusqu'à une épaisseur maximale prédéterminée, tandis qu'on limite la concentration maximale de glace dans la charge d'eau (9) à environ 30% de glace dans l'eau afin de maintenir la suspension en état d'être pompée, et

—on dégèle l'évaporateur (7) à la fin du cycle susmentionné,

caractérisé en ce que cette étape de dégivrage est constituée d'un cycle additionnel de dégivrage tandis que la pompe à chaleur reste en fonctionnement normal, pendant que

—l'on décharge de l'enceinte à vide (8) la suspension eau/glace formant de résidu de la charge d'eau (9),

—on introduit dans l'enceinte à vide (8) un volume d'eau (19) chauffé à une température élevée d'environ 35°C par écharge de chaleur avec le fluide de transfert de chaleur en amont du moyen de vanne d'étranglement (6) tandis que la pompe à vide (11) reste en fonctionnement, on provoque l'évaporation éclair de cette eau sous la basse pression régnante, ce qui entraîne une production de vapeur si intense que cette vapeur ne se désublime plus mais se condense sur la couche de glace de l'évaporateur (7) non seulement en fournissant de la chaleur pour l'évaporation du fluid de transfert de chaleur du circuit de la pompe à chaleur, mais encore en retirant en un temps bref toute la glace de l'évaporateur (7) en la faisant fondre, tandis que la température du volume d'eau (19) dans l'enceinte à vide (8) s'abaisse de façon notable, auquel moment, par l'introduction d'une

—charge d'eau fraîche (9) provenant de la source de chaleur principale (10), on rétablit le niveau normal de l'eau dans l'enceinte à vide (8) pour commencer un nouveau processus de vaporisation avec congélation sous vide et de désublimation.